# EUROPEAN PATENT APPLICATION

(11) **EP 4 563 497 A1**
(43) Date of publication of application: **04.06.2025**
(21) Application number: 24215903.6
(22) Date of filing: 27.11.2024
(51) Int. Cl.: B65F 3/00, G06Q 10/30

(54) **A WASTE MANAGEMENT APPARATUS, A WASTE COLLECTION VEHICLE, AND A METHOD FOR DETECTING NEW OBJECTS ENTERING THE VEHICLE**

(30) Priority: 29.11.2023 US 202318523830; 29.11.2023 EP 23307086
(71) Applicant: Lixo, 75018 Paris (FR)
(72) Inventor: ABADIE, Etienne, 75018 Paris (FR); BERNARD, Marc, 75018 Paris (FR); FILLION, Megan, 75018 Paris (FR); FRANCOIS, Tom, 75018 Paris (FR); KEMPF, Alexandre, 75018 Paris (FR); LARGE, Olivier, 75018 Paris (FR); MACHEREL, Loic, 75018 Paris (FR); PISTER, Paul, 75018 Paris (FR)
(74) Representative: Novagraaf Technologies

(57) **Abstract**

At a waste management apparatus (5) mounted on a waste collection vehicle (1), images of the waste dumped into a hopper (2) are acquired. An AI module is used to detect the objects and provide, for each detected object, a position in the image and a class in a predefined classification of objects. New objects are determined amongst the detected objects based on the output of the AI module. Each object detected in the given image is compared with a history of objects detected in a plurality of previous images, based on a function of a plurality of distances comprising at least a distance between the class and a distance between the position of the objects being compared.

## Description

### TECHNICAL FIELD

Various example embodiments relate generally to apparatus and methods for collecting waste, managing the waste being collected and analyzing the waste which has been collected.

### BACKGROUND

Waste collection is commonly organized in waste collection tours run by waste collection vehicles. During a waste collection tour, a waste collection vehicle collects waste at several waste collection points. A waste collection tour is often dedicated to a type of waste, for example glasses, selected waste, residual waste etc. Some waste collection vehicles are equipped to run two waste collection tours in parallel for example a tour dedicated to selected waste and a tour dedicated to residual waste.

There is a need for waste collection companies and their customers to obtain added value information about the waste collected during a waste collection tour. For example, such information can be used to take improvement actions impacting the sorting quality by the end user.

### SUMMARY

According to some aspects, there is provided the subject matter of the independent claims. Some further aspects are defined in the dependent claims.

In a first aspect, a waste management apparatus is disclosed. The disclosed apparatus is intended to be mounted on a waste collection vehicle equipped with at least one optical sensor configured to acquire images of waste entering the waste collection vehicle. The disclosed apparatus comprises at least one memory and at least one processor configured to process at least part of the acquired images through a machine learning module. The machine learning module (also referred to as AI module) detects one or more objects and for each object detected in a given image, provides at least a class in a classification of objects and a position of the object in the given image. The at least one memory and at least one processor is further configured to determine, amongst the detected objects, new objects entering the waste collection vehicle by comparing each object detected in the given image with a history of objects detected in a plurality of previous images based on a function of a plurality of distances comprising at least a distance between the class and a distance between the position of the objects being compared.

In an embodiment of the disclosed apparatus, the machine learning module provides a probability distribution of the classes for each object detected in the given image, and said plurality of distances further comprises a distance between the probability distribution of the classes of the objects being compared.

In an embodiment of the disclosed apparatus, the position of the object in a given image is defined by a bounding box around the object, the bounding box having a width, a height, and an area, and said plurality of distances further comprises at least one of a distance between a ratio of the width and the height of the bounding boxes around the objects being compared, and a distance between the area of the bounding boxes around the objects being compared.

Unlike conventional image processing techniques such as similarity filters, it ensures that waste that is already present in the hopper will always be considered as waste that was already present, despite any mechanical constraints it may face (if the waste is moved, partially covered, covered and then uncovered, etc.). Image processing techniques like verifying a similarity between two objects are exposed to noise (for example, if the object already present is subject to a strong mechanical stress, it could be considered as a new object, when it is not).

Instead, with the proposed approach, objects are located and identified individually. The disclosed approach provides significantly improved results over image processing solutions. For example, when the waste collection vehicle is not designed to compact waste regularly enough, the images will show a large number of objects staying in the hopper. The accuracy of the proposed approach, based on estimations output by the Al module, enables to address this situation and ensure an accurate differentiation of new objects entering the waste collection vehicle amongst objects visible on the picture. The proposed approach provides good results with any type of waste collection vehicle, whatever the compacting process used by the waste collection vehicle.

In an embodiment of the waste management apparatus, the at least one memory and at least one processor are further configured to send to a remote server, via a wireless interface, information about the new objects, comprising for a given new object at least the class of the given new object, a time and a location of the waste collection vehicle when the given new object entered the waste collection vehicle.

The information is received by the remote server and processed e.g. for further analysis to provide added value data to the client which can be used to improve the waste collection service.

In an embodiment, the disclosed waste management apparatus is configured to determine from the acquired images a type of entrance into the waste collection vehicle amongst at least the following: manual entrance, thrown from a bin lifted by the waste collection vehicle, thrown from a bin lifted manually or dumped from a container of a sorting terminal.

Determining the type of entrance in the waste collection vehicle is essential to waste collection operators and their clients for safety, hygiene and health reasons. Manually lifting and throwing waste can lead to injuries, such as strains, sprains, and cuts, especially if hazardous materials are mixed with regular waste. Sharp objects, heavy items, or biohazardous waste can pose significant risks to waste collectors. Handling waste by hand increases exposure to pathogens and contaminants, raising health risks. The determination of the type of entrance in the waste collection vehicle can also be used to manage urban cleanliness. Therefore, many cities and waste management companies have policies and regulations that specify how waste should be handled to ensure a safe working environment and proper sanitation. For example, not following these policies can lead to penalties. The disclosed embodiment enables monitoring the application of such policies on the field.

The determination of the type of entrance in the waste collection vehicle can also be used to analyze the behavior of the inhabitants and adapt to their needs. For example, when a high number of waste bags are regularly thrown manually into the waste collection vehicle at a certain location, this may indicate that the corresponding location is not equipped with a sufficiently high number of bins. A decision can be taken to increase the number of bins, or change the applicable contract to adapt to the actual volume of waste. For example, when bags are being manually added for a given company, this indicates that the company is generating more waste than its available bins can accommodate. This situation likely reflects a mismatch with the company's waste collection contract, signaling that adjustments to the contract or additional equipment may be necessary.

The proposed method of determining the type of entrance in the waste collection vehicle is based on estimations provided the AI module. It doesn't depend on the configuration of the waste collection vehicle, particularly it can be used with waste collection vehicles of different loading types (side-loading, rear-loading, crane...) without adaptation.

In an embodiment, the at least one memory and at least one processor are further configured to determine, from the acquired images, a stream of waste associated with the new objects, amongst at least two streams of waste corresponding to at least two types of waste collection tours run in parallel by the waste collection vehicle. This embodiment is adapted to multi-stream waste collection vehicles arranged to collect at least two streams of waste in parallel, each stream corresponding to a different type of waste collection tour e.g. recyclable waste and residual waste.

Advantageously, the at least one memory and at least one processor are further configured to include, in the information sent to the remote server, the indication of stream and/or the type of entrance in the waste collection vehicle.

In an embodiment of the disclosed waste management apparatus, the at least one memory and at least one processor are further configured to control the at least one optical sensor to acquire images continuously while the waste collection vehicle is in service.

In an embodiment of the disclosed waste management apparatus, the at least one memory and at least one processor are further configured to determine if the waste collection vehicle is in motion and disregard new objects identified from images acquired while the waste collection vehicle is in motion.

In an embodiment of the disclosed waste management apparatus, the object classification relates to sorting rules so that a type of waste collection tour can be determined from a class of the object. And the at least one memory and at least one processor are further configured to determine an actual type of the given waste collection tour from a distribution or a weighted distribution of the classes of at least a certain number of the new objects that entered the waste collection vehicle during the given waste collection tour.

For example, the sorting rules are stored in a table in the at least one memory in the waste management apparatus.

This embodiment enables automated determination of the actual type of waste collection tour which removes the need of configuration and/or interfacing. For example, with the disclosed solution there is no need for the waste collection operator to connect to a client system to obtain a planning of waste collection tours and determine from the planning the actual type of a waste collection tour. Also using color codes on containers is not a preferred solution as the color codes are subject to changes e.g. from place to place.

In an embodiment of the disclosed waste management apparatus, the at least one memory and at least one processor are further configured to map the class of the new objects that entered the waste collection vehicle during the given waste collection tour with an expected type of waste collection tour based on the sorting rules; to calculate a rate of waste contamination for a given location of the waste collection vehicle during the given waste collection tour, as a function or a weighted function of the number of new objects identified at said given location in each class mapped with an expected type of waste collection tour other than the actual type of the given waste collection tour; and to provide the rate of waste contamination.

In a second aspect, a waste collection vehicle is disclosed which comprises the waste management apparatus described above, taken in any combination.

In a third aspect, a computer implemented method for managing waste is disclosed, for use by a waste collection apparatus of a waste collection vehicle. The disclosed method comprises at least acquiring images of waste entering the waste collection vehicle and processing the acquired images through a machine learning module to: detect one or more objects and for each object detected in a given image, provide at least a class in a classification of objects and a position of the object in the given image. The disclosed method further comprises determining, amongst the detected objects, new objects entering the waste collection vehicle by comparing each object detected in the given image with a history of objects detected in a plurality of previous images based on a function of a plurality of distances comprising at least a distance between the class and a distance between the position of the objects being compared.

In an embodiment of the disclosed method, the machine learning module provides a probability distribution of the classes for each object detected in the given image, and said plurality of distances further comprises a distance between the probability distribution of the classes of the objects being compared.

In an embodiment of the disclosed method, the position of the object in a given image is defined by a bounding box around the object, the bounding box having a width, a height, and an area, and said plurality of distances further comprises at least one of a distance between a ratio of the width and the height of the bounding boxes around the objects being compared, and a distance between the area of the bounding boxes around the objects being compared.

In an embodiment, the method further comprises sending to a remote server information about the new objects, comprising at least, for a given new object, the class of the given new object, a time and a location of the waste collection vehicle when the given new object entered the waste collection vehicle.

In an embodiment, the object classification relates to sorting rules so that a type of waste collection tour can be determined from a class of objects, and method further comprises the determining an actual type of the given waste collection tour from a distribution or a weighted distribution of the classes of at least a certain number of the new objects that entered the waste collection vehicle during the given waste collection tour.

In an embodiment, the method further comprises mapping the class of the new objects that entered the waste collection vehicle during the given waste collection tour with an expected type of waste collection tour based on the sorting rules; calculating a rate of waste contamination for a given location of the waste collection vehicle during the given waste collection tour, as a function or a weighted function of the number of new objects identified at said given location in each class mapped with an expected type of waste collection tour other than the actual type of the given waste collection tour; and providing the rate of waste contamination.

In an embodiment, the method further comprises determining from the acquired images a stream of waste associated with the new objects, amongst at least two streams of waste corresponding to at least two types of waste collection tours run in parallel by the waste collection vehicle.

In a fourth aspect, a computer program product is disclosed comprising instructions which when executed by an apparatus cause the apparatus to perform at least the steps of a method as disclosed herein for managing waste by a waste management apparatus of a waste collection vehicle.

In a fifth aspect, a non-transitory storage medium is disclosed, for storing a computer program comprising instructions which when executed by an apparatus cause the apparatus to perform at least the steps of a method as disclosed herein for managing waste.

### BRIEF DESCRIPTION OF THE DRAWINGS

Example embodiments will become more fully understood from the detailed description given herein below and the accompanying drawings, which are given by way of illustration only and thus are not limiting of this disclosure.
FIG.1 is a schematic representation of a side view of waste collection vehicle.
FIG.2 is a schematic representation of a top view of a waste collection vehicle.
FIG.3 is a schematic representation of a waste collection vehicle comprising two dumpster compartments.
FIG.4A and FIG.4B are two top views of a hopper of a first example of dual-stream waste collection vehicle.
FIG.5A and FIG.5B are two top views of a hopper of a second example of dual-stream waste collection vehicle.
FIG.6 is block diagram of a waste collection management apparatus to be mounted on a waste collection vehicle.
FIG.7 is a schematic representation of an example of acquired images and processing performed by a waste collection management apparatus, based on the acquired images.
FIG.8 is a flowchart describing the steps for determining new objects amongst the detected objects.
FIG.9 is a flowchart describing the steps to be performed for determining the actual type of a waste collection tour.
FIG.10 is a flowchart describing the steps to be performed for providing a rate of waste contamination.
FIG.11 is a flowchart relating to a specific embodiment in which the determination steps are performed at remote server based on information received from a waste collection apparatus of a waste collection vehicle.

### DETAILED DESCRIPTION

Various example embodiments will now be described more fully with reference to the accompanying drawings in which some example embodiments are shown.

Detailed example embodiments are disclosed herein. However, specific structural and functional details disclosed herein are merely representative for purposes of describing example embodiments. The example embodiments may, however, be embodied in many alternate forms and should not be construed as limited to only the embodiments set forth herein. Accordingly, while example embodiments are capable of various modifications and alternative forms, the embodiments are shown by way of example in the drawings and will be described herein in detail. It should be understood, however, that there is no intent to limit example embodiments to the particular forms disclosed.

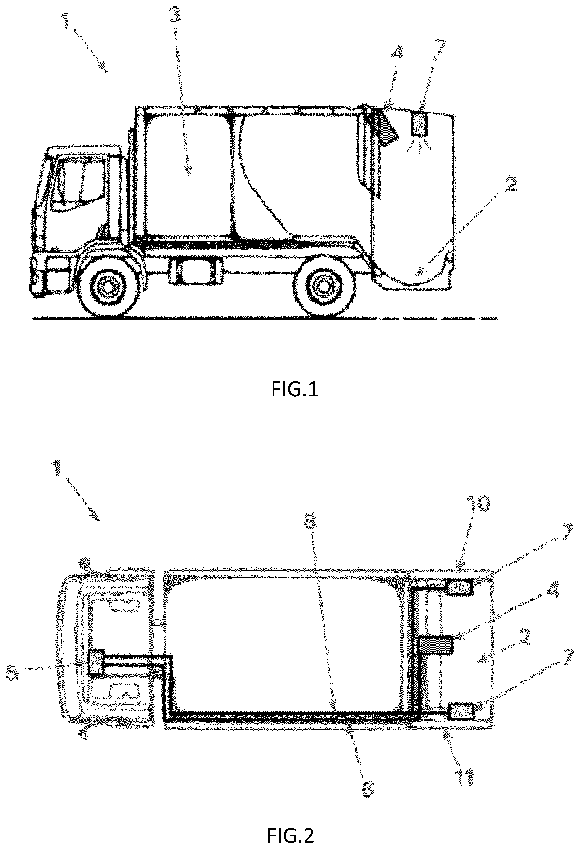

A waste collection vehicle 1 is represented in FIG.1 and FIG.2 by way of example. It comprises a hopper 2 into which the waste is to be dumped, at least one dumpster 3 into which the waste dumped into the hopper 2 is pushed, and a bin lifter (not shown in FIG.1) which tilts the bin to enable the waste contained in the bin to be dumped into the hopper 2.

The waste collection vehicle further comprises one or more optical sensors 4 configured to capture images of the waste dumped into the hopper 2, and a waste collection management apparatus 5 comprising at least one memory and at least one processor configured to process the acquired images. The waste collection vehicle 1 further comprises a location device (not represented in FIG.1 and FIG.2), which can be part of the apparatus 5 or can be placed outside of the apparatus 5 in the vehicle 1.

For example, the apparatus 5 is located inside the cabin of the vehicle and it is configured to provide the electrical interface between the optical sensor(s) 4 and the vehicle electrical system.

The apparatus 5 is communicatively coupled with the optical sensor(s) 4 to allow for the transmission of the images acquired by the optical sensor(s) 4 to the apparatus 5. In the example of FIG.1 and FIG. 2, the apparatus 5 is connected to the optical sensor(s) 4 via an Ethernet PoE (Power over Ethernet) connection 6 which provides both an electrical and a communication support to the optical sensor(s) 4. Alternatively, the apparatus 5 and the optical sensor(s) 4 can communicate through a wireless link.

In an embodiment, the vehicle 1 also comprises one or more lighting source(s) 7 mounted on one or more walls 10 of the vehicle 1 to illuminate an area around the hopper 2 thereby facilitating the acquisition of the images by the optical sensor(s) 4. In the example of FIG.1 and FIG.2, the apparatus 5 provides the electrical interface between the lighting sources 7 and the vehicle 1.

For example, the one or more optical sensors 4 are cameras arranged to capture in their field of view the waste dumped into the hopper 2 and the interior of hopper 2. In some embodiment, the one or more cameras are arranged to capture additional elements such as the bin, or one or more vehicle parts which position provide meaningful information for the purpose of managing or analyzing the waste being collected. For example, the position of the bin, or the color of the bin, or the position of a vehicle part can be used to derive a type of waste collection tour as will be further described below.

In the example of FIG.1 and FIG.2, one camera is used which is fixed to the top wall of the vehicle 1. It is possible to use a plurality of cameras to acquire different views of the waste being collected.

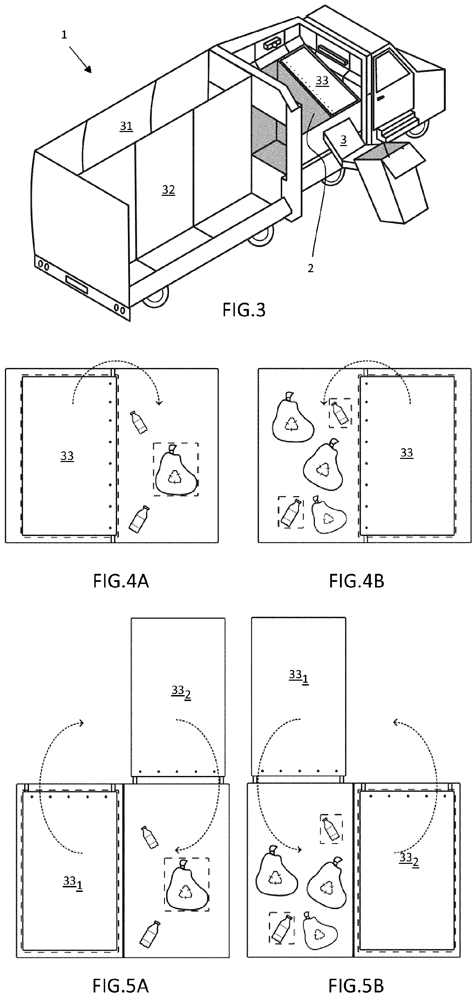

A waste collection vehicle as disclosed herein may comprise a plurality of dumpster compartments to handle a plurality of streams of waste corresponding to different types of waste collection tours run in parallel by the waste collection vehicle. FIG.3 illustrates an example of waste collection vehicle comprising two dumpster compartments 31 and 32 to handle two streams of waste. In the example illustrated in FIG.3, the hopper 2 and the bin lifter 3 are positioned on the side of the waste collection vehicle and the waste collection vehicle comprises a vehicle part 33 arranged to selectively push the waste dumped into the hopper in one of the two dumpster compartments 31 or 32.

For example, as illustrated in FIG.4A and FIG.4B, the vehicle part 33 can be a sliding or a tipping hatch or any other equivalent means which can take one of two positions to selectively open one of the two dumpster compartments 31 or 32. Depending on the position of the vehicle part 33, the waste dumped into the hopper 2 is pushed in one of the two dumpster compartments 31 or 32. In another example, illustrated in FIG.5A and in FIG.5B, the vehicle part 33 comprises one hatch for each dumpster compartment 33, and 33₂ respectively, which are controlled to selectively open one of the two dumpster compartments 31 or 32. In the figures, the objects which constitute contaminating objects are highlighted with a dotted line box. An object is considered contaminating when it is not sorted correctly and consequently is not dumped in the appropriate dumpster. For example, in FIG.4A the waste bag is a contaminating object as the dumpster is dedicated to a waste collection tour for collecting glasses. In FIG.4B, the bottles are contaminating objects, as the dumpster is dedicated to a waste collection tour to collect residual waste.

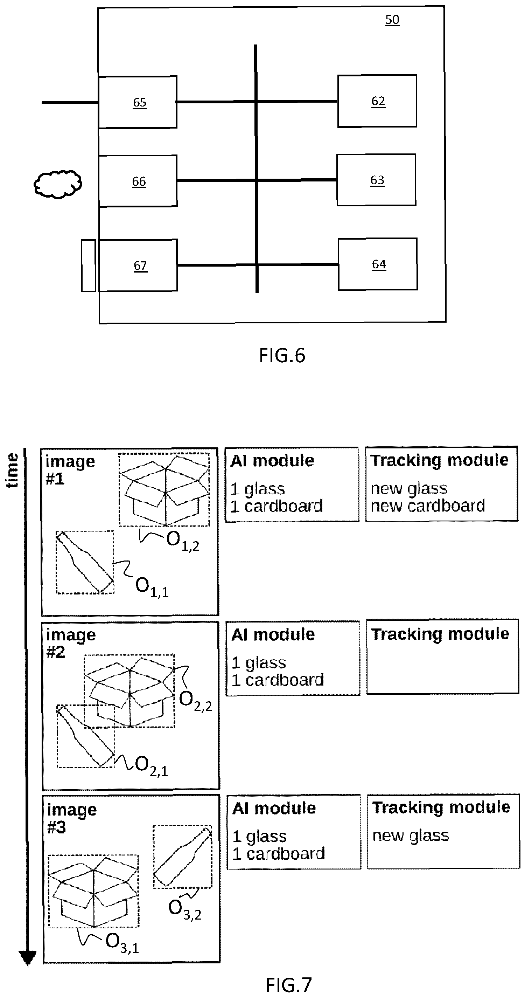

FIG.6 depicts a high-level block diagram of a waste collection management apparatus 5 suitable for implementing a waste management method as disclosed herein. According to the exemplary embodiment depicted in FIG.6, the apparatus 5 comprises a printed circuit board 60 on which a communication bus 61 connects a processor 62, a random access memory 63, a storage medium 64, a wired communication interface 65 to connect to one or more optical sensor(s), a wireless interface 66 to connect to a remote server and optionally, depending on the functionalities required, one or more connectors 67 to connect external modules such as e.g. a USB key, a display, a keyboard, a mouse etc. The storage medium 64 contains software code which, when executed by the processor 62, causes the apparatus to perform the method disclosed herein. The processor 62 may be any type of processor or a combination of processors preferably including a GPU to enable execution of the AI model in real time. In addition, the apparatus 5 may include other components typically found in computing systems, such as an operating system, queue managers, device drivers, or one or more network protocols that are stored in memory 64 and executed by the processor 62. Although not depicted in FIG.6 for simplicity, the printed circuit board 60 further comprises an electrical bus to power the various components of the printed circuit board. The electrical bus has at least one interface to receive power from an external source / transmit power to one or more external devices. For example, the apparatus 5 is powered by the waste collection vehicle 1 and provides power to the optical sensor(s) 4 and the lighting source(s) 7.

Advantageously, images are acquired continuously by the optical sensor(s) 4 while the waste collection vehicle 1 is in service (rather than being acquired upon reception of a triggering signal e.g. a triggering signal indicative of a start of the waste collection at a waste collection point). With the disclosed embodiment, there is no need to receive and monitor any additional triggering signal. There is no need for additional connectivity between the waste collection vehicle 1 and the apparatus 5.

The waste collection management apparatus as disclosed herein is configured to receive and process the acquired images 4 to detect objects, and, for each detected object, provide at least a class of objects in a classification of objects and a position of the object in the image, to determine, amongst the detected objects, new objects entering the waste collection vehicle. For example, the apparatus 5 uses a machine learning module (or AI module) to detect objects in the acquired images, classify the detected objects according to the classification, and provide the classification and the position of the detected objects to a tracking module configured to determine new objects entering the waste collection vehicle amongst the detected objects. Then, the apparatus 5 can send to a remote server information about the new objects, comprising at least the class of the new object, a time, and a location of the waste collection vehicle when the new object enters the waste collection vehicle.

For example, an object can be a bag containing waste, a packaging, a box, a bottle, a bulky item, etc.

In an embodiment, the classification relates to waste sorting rules and is such that a type of waste collection tour can be determined from the classes of the objects collected during a given waste collection tour as will be further described below. For example, the classification of objects can include the following classes: black waste bags, yellow waste bags, cardboard, expanded polystyrene, plastic bottle, plastic bags, metal packaging, glass, fabrics, wood, yard waste, kitchen waste, construction waste, hazardous waste, etc.

An object is referred to as a new object entering the waste collection vehicle when it is detected for the first time. It is possible that an object is not visible first, because it is hidden by other objects. In this situation, the object may not be detected immediately when it is dumped into the hopper. It may be detected at a later point, in subsequent acquired images. It is also possible that an object is visible in several images, or visible alternatively in some images and not in others as objects move into the hopper. In this situation, the object is determined as a new object when it is first detected, and then it is ignored.

In the following of the description, an object detected in a given image is referred to as a detection and is denoted O_{k,j} where index k indicates the image and index j indicates the object.

FIG.7 illustrates a method of detecting objects and determining new objects entering the waste collection vehicle that can be performed by the apparatus 5 upon reception of acquired images. In FIG.7, three images are received successively in time image#1, image#2 and image#3. For each image, two objects are detected O_{1,1} and O_{1,2} in image#1, O_{2,1} and O_{2,2} in image#2, and O_{3,1} and O_{3,2} in image#3. For illustration purposes, the objects O_{1,1} , O_{2,1}, and O_{3,2} are represented as bottles and the objects O_{1,2} , O_{2,2} and O_{3,1} are represented as boxes. The AI module detects the objects and assigns a class to each of them: the class "glass" is assigned to the objects O_{1,1}, O_{2,1}, and O_{3,2}. The class "cardboard" is assigned to the objects O_{1,2}, O_{2,2} and O_{3,1}. For each image, the tracking module determines if the two detected objects are new objects entering the waste collection vehicle. In image#1, both objects O_{1,1} and O_{1,2} are determined as new objects. In image#2, the bottle is in the same position as in image#1 but the box has moved compared to image#1. The tracking module determines that the detected objects O_{2,1} and O_{2,2} are the same as objects O_{1,1} and O_{1,2} detected in image#1, which means that no new object is determined in relation to image#2. In image#3, the bottle at the bottom left corner of image#1 and image#2 is no longer visible, the box of image#1 and image#2 is still visible and has continued to move towards the bottom left corner of image#3, and a bottle is visible on top right corner of the image. The tracking module determines that the detected object O_{3,1} was already present in the previous images, and that the detected object O_{3,2} is a new object entering the waste collection vehicle.

There are several ways of determining a new object entering the waste collection vehicle.

In an embodiment, the AI module provides, for each object detected in a given image, a position of the detected object in said given image, in addition to providing the class of the object. For example, the position of the object is provided as coordinates of a bounding box containing the object. The position of the objects in the acquired images is used by the tracking module to determine whether the detected object is a new object or whether it was already present in a previous image. The determination is made by comparison with detections in previous images. Although not essential, the tracking module can also perform an estimation of movement of the detected objects and use the movement estimation to make the determination. Estimation of movement can be performed by using known solution e.g. Kalman filters.

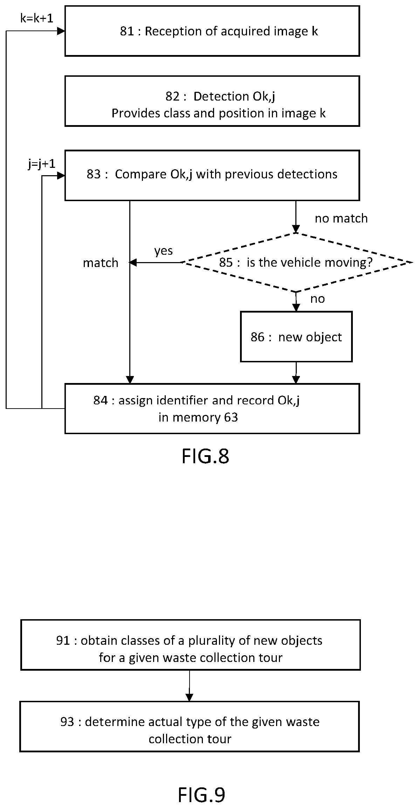

The determination of new objects will now be described in more details with reference to FIG.8. In the method depicted in FIG.8 for each detection O_{k,j}, a record is stored in the memory 63. Advantageously, the memory 63 stores records for the N previous images. For example, N is an integer within 40 and 100. Keeping a certain history of records ensures that objects which are no longer visible in the acquired images are not determined as new objects when they reappear in newly acquired images. An object which remains invisible in N successive images can be considered as definitively processed (picked up and compacted in the dumpster).

The records stored in memory 63 comprise at least the position of the detected object in the given image (e.g. the coordinates of the bounding box around the object) and information descriptive of the detected object. For example, the information descriptive of the object can be the class of the object and an object identifier that uniquely identifies each object, as will be further described below. For example, the unique identifiers are natural numbers.

For example, the record associated to a detection can include a confidence score provided by the AI module which indicates the confidence associated to the detection made by the AI module. The confidence score can advantageously be used by the tracking module when making determinations e.g. the confidence score may need to exceed a certain threshold for a detection to be considered in the determination process.

Other descriptive information can be used. For example, rather than using the class of higher probability for a detected object, it is possible to use the probability distribution of the classes. The probability distribution of the classes of an object can be defined as the list of all classes, with a confidence score associated with each of the classes. It is provided by the AI module. Images can also be used. Using other descriptive information can provide a more precise tracking than just using the class of the object. For example, using the image can allow to differentiate similar objects based on their color. Using the probability distribution of the classes allows to make better decisions when the model hesitates about the class of an object.

As illustrated in FIG.8, at step 81, an acquired image k is received by the apparatus 5. At step 82, the AI module detects objects O_{k,j} in image k and provides for each detection at least the class and the position in image k. At step 83, the detection O_{k,j} is compared with previous detections recorded in memory 63. For example, the comparison starts with the most recent detections (that is the detections in the previous image k-1) and, if no match is found, continues with older detections.

When a match is found between the current detection O_{k,j} and the previous detections stored in memory 63, the current detection O_{k,j} inherits the already assigned unique identifier for that object and it is recorded in the memory 63 at step 84. Then, the method resumes at step 83 with the next detection O_{k,j+1}. When all detections in image k are processed, the method resumes at step 81 with the next acquired image k+1.

On the contrary when no match is found, optionally, at step 85, an additional check is done based on the speed of the waste collection vehicle to eliminate false positives (it is assumed that no waste is being dumped into the hopper when the waste collection vehicle is moving). When the speed of the waste collection vehicle is below a threshold, at step 86, the detected object is determined a as a new object. Otherwise, the detected object is determined as being a false positive and is ignored. Then at step 84, the current detection O_{k,j} is assigned a new unique identifier and it is recorded in the memory 63. Then, the method resumes at step 83 with the next detection O_{k,j+1}. When all detections in image k are processed, the method resumes at step 81 with the next acquired image k+1.

For example, the speed of the waste collection vehicle can be calculated from the positions provided by a location device embedded in the waste collection management apparatus 5. This implementation is advantageous because it limits the need for connectivity between the apparatus 5 and the waste collection vehicle 1.

In a first embodiment, the current detection O_{k,j} and the previous detections stored in the memory 63 can be compared by applying known solutions like Intersection Of Union (IOU) or alternatives like Generalized Intersection Of Union (GIOU) or Complete Intersection Of Union (CIOU). These solutions typically compare the common area between the two bounding boxes around the objects which are being compared. Such solutions can provide sufficient results when the images compared are close enough in time. However, the results may be insufficient when the time between the images being compared increases. As explained above, objects can disappear and reappear in the sequence of images and therefore comparison needs to be made over a sufficiently long sequence of images (e.g. the memory 63 keeps a history of 40 to 100 records). In in this situation, there is a need for a method that provides better results than the above-mentioned IOU based methods.

In a second embodiment, each object in the current image is matched with the objects in the history of records by solving a Linear Assignment Problem (LAP) defined by one or more variable amongst the following variables: distance between the classes; distance between the positions, distance between the probability distribution of classes; distance between aspect ratios (the aspect ratio being defined as the ratio between the width and the height of the bounding box of an object); distance between sizes (the size being defined as the area of the bounding box) The variable used are provided by the Al module.

For example, comparing an object in the current image with the objects in the history can be done as follows:
- each variable used is normalized to obtain values between 0 and 1, 0 indicating that the objects are similar and 1 indicating that the objects are different);
- the sum of the normalized variables is computed for each comparison of objects.

Two objects are matched together by looking at the sum of the variables. The smallest the sum, the highest the probability that the objects are the same. For example, a match can be found when the minimum is below a given threshold. For example, if any of the variables used is equal to 1, no match can be found.

The above-described comparison process can be repeated for a sequence of several acquired images, the variables being updated for each image in the sequence. Reliable results can be achieved by processing a sequence captured at a rate of 3 images per second.

This second embodiment gives satisfactory results with any type of waste collection vehicle, whatever the waste compacting process they use. For example, when there is no or not enough compacting of waste in the hopper, many objects that are not new objects remain visible in the images. They can be distorted by mechanical stress and can be difficult to recognize. With this second embodiment, the risk that such objects are identified as new objects is reduced significantly.

The position of the detected objects is advantageously included in the information sent to the remote server. For example, the position can be presented to the waste collection service operator or/and its client in connection with proof images to improve the management of the waste collection services. For example, proof images can be checked by a physical person and can be used to re-retrain the AI module.

Other determinations can be made by the apparatus 5 based on the acquired images and added to the information sent to the remote server. For example, the apparatus 5 can determine, from the acquired images, a type of entrance into the waste collection vehicle. For example, the type of entrance can be a manual entrance, an entrance via a bin lifted by the waste collection vehicle, or via a bin lifted manually, or via a container which is being discharged into the waste collection vehicle (e.g. a street container or a container at a drop off point). Other types of entrance can be determined. Such data are advantageously presented to the waste service operator and/or its clients as they can help improve the management of the waste collection services.

For example, the class of the object is used to determine that a new bin is lifted: if the image contains a new object with class "lifted bin", the type of entrance in the waste collection vehicle is deterred as "lifted bin". For example, the trajectory of the object is used to differentiate thrown objects: when a unique object moves towards the center of the hopper, starting from the outside of the hopper, the type of entrance is determined as "manual entrance". In another example, left/right/middle bins are differentiated by looking at the position of the bin in successive images. For instance, when the bin stays at the leftmost part of the image for successive images, it is determined as a "left lifted bin". In another example, regular bins are differentiated over larger containers by looking at the size of the detected object and/or by counting the time spent to empty the bin (larger containers usually take more time than regular bins to be emptied and larger containers usually contain more objects).

Determining the type of entrance as described above, based on the estimations provided by the AI module, is advantageous because it can be used with waste collection vehicles of different loading types (side-loading, rear-loading, crane...).

In another example, the waste collection vehicle is a multi-stream vehicle arranged to collect two (or more) streams of waste corresponding to different types of waste collection tours run in parallel by the waste collection vehicle (e.g. residual waste and recyclable waste). In this example, the apparatus 5 determines, from the acquired images, the stream associated with the new objects. As will be further described below, this indication can be used to calculate a rate of waste contamination. For example, the acquired images would show which dumpster is closed when the images are captured, each dumpster corresponding to one stream of waste.

In an embodiment, the information about the new objects, generated at the apparatus 5, is sent to a remote server through a wireless connection and used for further analysis at the remote server. This information comprises at least the class of the new objects as well as a time and a location of the waste collection vehicle when the new objects entered the waste collection vehicle. Advantageously, for each new object, the following data are included in the information sent to the remote server: the class of the new object, the position of the new object, the confidence score associated with the class of the new object, or the probability distribution of the classes for the new object, the acquired image in which the new object was detected, the date and the time of capture of the acquired image, and the location of the waste collection vehicle when the image was acquired. When the waste collection vehicle is a multi-stream vehicle, an indication of stream is also included. Depending on the functionalities required on the client side, and depending on the bandwidth available, some of the data listed above may be omitted, or other data may be included. For example, a short video showing the waste dumped into the hopper could be sent as well (e.g. a few images before and a few images after the waste is dumped). Also, when bins are identified by an electronic tag, an identifier of the bin can be included. As previously mentioned, the type of entrance into the waste collection vehicle can also be added.

Advantageously, the information can be packaged to limit the bandwidth required. For example, when several new objects are detected in the same acquired image, the data which are common to all new objects are sent only once (for example, the acquired image, the location of the waste collection vehicle, the date and time when the acquired image is captured are sent once for all new objects detected in the same acquired image).

On the side of the remote server, the information is received and processed before being made available to a user through a user interface.

FIG.9 is block diagram describing the steps to be performed for determining the actual type of a given waste collection tour. The steps of FIG.9 can be performed by a remote server or by the waste management apparatus depending on the implementation.

At step 91, information about new objects entering the waste collection vehicle are obtained. This information comprises at least the classes of a certain number of new objects that entered the waste collection vehicle during the given waste collection tour. The object classification relates to sorting rules so that a type of waste collection tour can be determined from the class of an object. For example, when the method of FIG.9 is implemented by the remote server, the sorting rules are stored in a table in the remote server, and when it is implemented by the waste management device 5, they are stored in a table in the memory 63.

At step 93, an actual type of the waste collection tour is determined for the give, waste collection tour from a distribution or a weighted distribution of the classes of the new objects at least a certain number of the new objects that entered the waste collection vehicle during the given waste collection tour (obtained at step 91).

Advantageously, a weighting factor referred to as first weighting factor, may be applied to some classes when determining the actual type of waste collection tour. For example, without weighting, a collection point with a total of 5 black waste bags, 7 plastic bags and 1 cardboard would be associated with a recyclable waste collection tour as the distribution is 8 recyclables items against 5 non-recyclable items. However, it is infrequent that black waste bags are placed in a recyclable bin or container. On the contrary, it is quite frequent that people make mistakes about plastic bags and place them in non-recyclable bins or containers. With a weighting, it is possible to give more importance to classes for which sorting errors are less frequent. For example, a weight of 2 can be given to black waste bags, a weight of 0.2 can be given to plastic bags, and a wait of 1 can be given to cardboards. The weighted distribution is 2*5=10 residual waste vs. 1+0.2*7=2.4 recyclable waste. And the actual type of waste collection tour is determined to be a non-recyclable waste collection tour.

Weighting can take into account several parameters, for example, how reliable the AI module is for detecting objects, how frequent it is that the user makes sorting mistakes in relation to a given class of objects, or even how big the objects are.

For example, the type of waste collection tour is determined progressively while objects are being collected. For example, when several bins are collected successively, each bin is analyzed. For example, when the first collected bin contains a significant number of objects classified as recyclables, the waste collection tour is initially determined as a recyclable waste collection tour. However, if the next bins contain fewer recyclable items, and predominantly relate to another type of waste collection tour (e.g. non-recyclable or glasses), then the actual type of waste collection tour is updated to align with the dominant class of objects.

Determining the actual type of waste collection tour automatically is advantageous as it removes configuration and interfacing constraints. For example, with the disclosed solution there is no need for the waste collection operator to connect to a client system to obtain a planning of waste collection tours and then determine from the planning the actual type of a waste collection tour. The automated solution disclosed herein doesn't rely on rules which may be client specific and subject to changes (e.g. defining a color code for the bags or the containers).

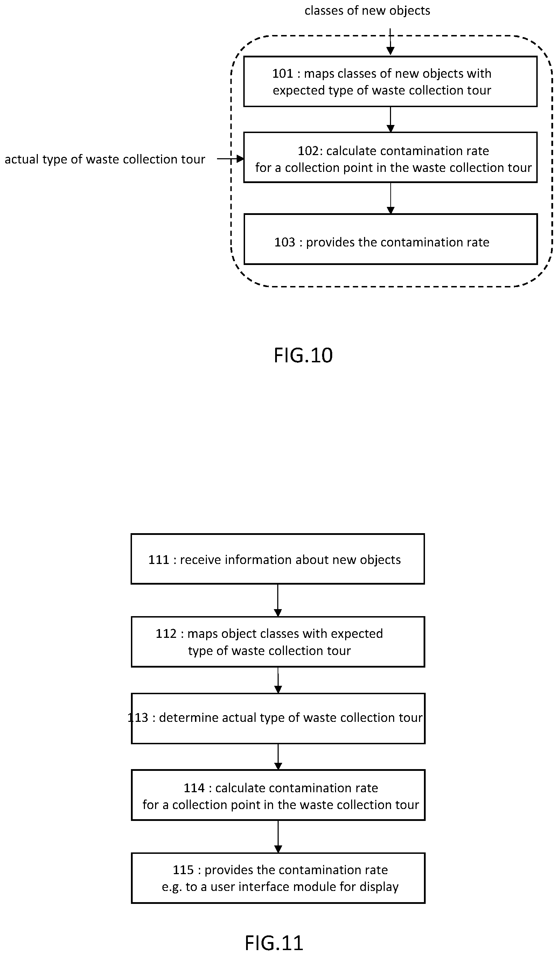

FIG.10 is block diagram describing the steps to be performed for providing a rate of waste contamination. The steps of FIG.10 can be performed by a remote server or by the waste management apparatus.

At step 101, the class of the new objects are mapped with an expected type of waste collection tour based on sorting rules stored in a table. For example, four different types of waste collection tour can be defined: residual waste, recyclable waste, biowaste and glasses. For example, an object classified as "yard waste" will be mapped with the expected waste collection tour "biowaste", or a box classified as "cardboard" will be mapped with the expected waste collection tour "recyclable waste".

At step 102, the actual type of the waste collection tour is obtained and a rate of waste contamination is calculated, for a waste collection point in a waste collection tour, as a function or a weighted function of the number of new objects identified in each contaminating class (a class being considered contaminating when it is mapped with an expected type of waste collection tour other than the actual type of the waste collection tour).

A weighting can also be used for calculating the rate of waste contamination. The number of contaminating objects in each class is multiplied with a second weighting factor which can be the same as the first weighting factor or can be different. For example, the rate of waste contamination can be calculated as the ratio of the sum of the weighted numbers obtained, over the total number of new objects for the given waste collection tour. For example, for a given class, the second weighting factor depends on the severity of the contamination associated with said given class (e.g. a gas bottle can be considered as more contaminating and therefore have a higher second weighting factor than a plastic bottle).

At step 103, the waste contamination rate is delivered e.g. to a user interface module. For example, the user interface module can be in the waste collection vehicle. It can also be a user interface of a user device connecting to the remove server or to the waste management apparatus.

The steps of FIG.9 and 10 can be performed either by the waste management apparatus by the remote server.

Mapping the classes of the new objects with a type of waste collection tour at the remote server can be advantageous because the mapping table used by the remote server can be updated at any time by the waste service operator or its clients. The mapping table can also be adapted client by client. For example, different cities may implement different sorting rules, so that a class of waste regarded as residual waste in one city, will be regarded as recyclable waste in another city. For example, yellow waste bags can be dedicated to recyclable waste in one city or to residual waste in another city.

However, determining the rate of contamination locally in the vehicle rather than in the remote server can serve various purposes that require real-time actions. For example, it can be used to stop the container from being emptied into the hopper when an improper sorting was detected. It can be used to activate a warning light inside or outside the waste collection vehicle to signal contamination in real-time, or to send contamination data to a third-party system directly connected to the waste management apparatus. In another example, determining the actual type of waste collection tour in the waste management apparatus can be used to determine in real-time whether a waste item needs to be removed from the hopper e.g. due to the severity of the contamination brought by the waste item to the current stream of waste. Such determination needs to be made in real-time, even in the absence of a 4G connection between the waste management apparatus and the remote server (e.g., when the waste collection vehicle is in a tunnel). In a first embodiment, when the waste collection vehicle is a single-stream vehicle, at step 93, the actual type of the waste collection tour is determined from the distribution or the weighted distribution of the classes of the new objects entering a waste collection vehicle during the given waste collection tour. This information varies as the waste collection tour proceeds. For example, a certain number of new objects to be detected before obtaining an actual type of waste collection tour which is reliable.

In an embodiment, a start and an end of the waste collection tour are determined. This can be achieved by using the GPS coordinates of the waste collection vehicle and the period of inactivity. For example, when no bins are detected for a certain duration of time and the vehicle remains stationary within the same area during that duration (as determined by the GPS), it can be inferred that the vehicle is at a disposal site or parked. In other words, the waste collection tour has ended. When the waste collection vehicle runs again, it can be inferred that a new waste collection tour starts.

In an embodiment, when the waste collection vehicle is a multi-stream vehicle, an indication of stream is associated with the new objects. As disclosed above, this information is obtained by the AI module from the acquired image which shows which dumpster compartment(s) is/are closed when the waste is dumped into the hopper. This indication of stream is used to assign objects to a waste collection tour amongst several waste collection tours run in parallel by the waste collection vehicle.

For example, the user interface module can display a map where the collection points for a given collection tour period are displayed. For example, the collection point can be represented as a colored point, the color indicating the rate of contamination of the waste collected at said collection point during said collection tour. And when the user clicks on the point, access to further information can be provided such as the acquired image in which the new object was detected.

Other embodiments and aspects of the present disclosure are described below.

For example, the disclosed apparatus is to be mounted on a waste collection vehicle equipped with at least one optical sensor configured to acquire images of waste entering the waste collection vehicle, the waste management apparatus comprising at least one memory and at least one processor configured to process at least part of the acquired images to : detect one or more objects, for each object detected in a given image, provide at least a class in a classification of objects, determine, amongst the detected objects, new objects entering the waste collection vehicle, and send to a remote server information about the new objects, comprising at least the class of the new object, a time and a location of the waste collection vehicle when the new object entered the waste collection vehicle.

For example, the waste management apparatus is configured to provide, for each object detected in a given image, a position in said given image. And determining new objects entering the waste collection vehicle comprises: storing, in a memory, records corresponding to objects detected in previous images, a given record comprising at least the position of the given object in the given previous image and information descriptive of the given object; for each detected object in the current image, comparing the position and the descriptive information of the detected object with the records in the memory, when no match is found determine that the detected object is a new object; and storing in the memory a new record corresponding to the detected object in the current image.

For example, the comparison of the position and the descriptive information of the detected object with the records in the memory takes into account an estimation of movement of the detected object.

For example, the acquired images are processed through a machine learning module, the machine learning module detecting objects in a given image, and providing for each detected object, at least the class of the detected object and in combination with the tracking module, an object identifier that uniquely identifies the detected object, an object being determined as a new object when the object identifier is different from the identifiers of the objects detected in previous images.
For example, the remote server can execute a computer implemented method which comprises at least: receiving from a waste management apparatus, information about new objects entering a waste collection vehicle during a given waste collection tour, said information comprising at least, for each new object, an object class in a classification of objects, a time and a location of the waste collection vehicle when the new object entered the waste collection vehicle; mapping the class of the new objects with an expected type of waste collection tour based on sorting rules stored in a table; obtaining an actual type of the given waste collection tour; calculating a rate of waste contamination for a given location of the waste collection vehicle during the given waste collection tour as a function of the number of new objects identified at said given location which classes are mapped with an expected type of waste collection tour other than the actual type of the given waste collection tour; providing the rate of waste contamination. For example, the method further comprises determining the actual type of a given waste collection tour from the distribution of the classes of the new objects entering a waste collection vehicle during the given waste collection tour. For example, the information received from the waste management apparatus comprises, for each new object, an indication of the actual type of waste collection tour associated with the new object.FIG.11

FIG.11 is a flowchart relating to a specific embodiment in which the determination steps are performed at remote server based on information received from a waste collection apparatus of a waste collection vehicle.

At step 111, the remote server receives, from a waste management apparatus of a waste collection vehicle, information about new objects entering the waste collection vehicle. This information comprises at least the class of the new objects and the time and location where the new objects have been collected. The time is used to associate a waste collection tour to the new objects. The location is used to associate a waste collection point within the waste collection tour.

At step 112, the class of the new objects are mapped with an expected type of waste collection tour based on sorting rules stored in a table at a remote server. For example, four different types of waste collection tour can be defined: residual waste, recyclable waste, biowaste and glasses.

At step 113, an actual type of the waste collection tour is obtained for the waste collection tour associated with the new objects. As will be further described below, there are several ways of obtaining the actual type of the waste collection tour associated with a new object.

At step 114, a rate of waste contamination is calculated, for a waste collection point in a waste collection tour, as a function of the number of new objects identified at said waste collection point during said waste collection tour, which classes are mapped with an expected type of waste collection tour other than the actual type determine for the waste collection tour. At step 115, the waste contamination rate is delivered e.g. to a user interface module.

It should be appreciated by those skilled in the art that any block diagrams herein represent conceptual views of illustrative circuitry embodying the principles of the disclosure. Similarly, it will be appreciated that any flow charts, flow diagrams, state transition diagrams, and the like represent various processes which may be substantially implemented by circuitry.

Each described function, engine, block, step can be implemented in hardware, software, firmware, middleware, microcode, or any suitable combination thereof. If implemented in software, the functions, engines, blocks of the block diagrams and/or flowchart illustrations can be implemented by computer program instructions / software code, which may be stored or transmitted over a computer-readable medium, or loaded onto a general purpose computer, special purpose computer or other programmable processing apparatus and / or system to produce a machine, such that the computer program instructions or software code which execute on the computer or other programmable processing apparatus, create the means for implementing the functions described herein.

In the present description, block denoted as "means configured to perform ..." or "module configured to perform..." (a certain function) shall be understood as functional blocks comprising circuitry that is adapted for performing or configured to perform a certain function. A means or module being configured to perform a certain function does, hence, not imply that such means necessarily is performing said function (at a given time instant). When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, Graphic Processing Units (GPU), digital signal processor (DSP) hardware, network processor, application specific integrated circuit (ASIC), field programmable gate array (FPGA), read only memory (ROM) for storing software, random access memory (RAM), and non-volatile storage. Other hardware, conventional or custom, may also be included. Their function may be carried out through the operation of program logic, through dedicated logic, through the interaction of program control and dedicated logic, or even manually, the particular technique being selectable by the implementer as more specifically understood from the context.

As used herein, the term "and/or," includes any and all combinations of one or more of the associated listed items.

When an element is referred to as being "connected," or "coupled," to another element, it can be directly connected or coupled to the other element or intervening elements may be present. Other words used to describe the relationship between elements should be interpreted in a like fashion (e.g., "between," versus "directly between," "adjacent," versus "directly adjacent," etc.).

The terminology used herein is for the purpose of describing particular embodiments only and is not intended to be limiting. As used herein, the singular forms "a," "an," and "the," are intended to include the plural forms as well, unless the context clearly indicates otherwise. It will be further understood that the terms "comprises," "comprising," "includes," and/or "including," when used herein, specify the presence of stated features, integers, steps, operations, elements, and/or components, but do not preclude the presence or addition of one or more other features, integers, steps, operations, elements, components, and/or groups thereof.

Benefits, other advantages, and solutions to problems have been described above with regard to specific embodiments. However, the benefits, advantages, solutions to problems, and any element(s) that may cause or result in such benefits, advantages, or solutions, or cause such benefits, advantages, or solutions to become more pronounced are not to be construed as a critical, required, or essential feature or element of any or all the claims.

## Claims

1. A waste management apparatus to be mounted on a waste collection vehicle equipped with at least one optical sensor configured to acquire images of waste entering the waste collection vehicle, the waste management apparatus comprising at least one memory and at least one processor configured to:
- process at least part of the acquired images through a machine learning module to detect one or more objects, and for each object detected in a given image, provide at least a class in a classification of objects, and a position of the object in the given image,
- determine, amongst the detected objects, new objects entering the waste collection vehicle, by comparing each object detected in the given image with a history of objects detected in a plurality of previous images, based on a function of a plurality of distances comprising at least a distance between the class and a distance between the position of the objects being compared.

2. The waste management apparatus of claim 1, wherein the machine learning module provides a probability distribution of the classes for each object detected in the given image, and said plurality of distances further comprises a distance between the probability distribution of the classes of the objects being compared.

3. The waste management apparatus of any of claims 1 or 2, wherein the position of the object in a given image is defined by a bounding box around the object, the bounding box having a width, a height, and an area, and said plurality of distances further comprises at least one of a distance between a ratio of the width and the height of the bounding boxes around the objects being compared, and a distance between the area of the bounding boxes around the objects being compared.

4. The waste management apparatus as claimed in any of claims 1 to 3, wherein the at least one memory and at least one processor are further configured to determine from the acquired images a type of entrance into the waste collection vehicle amongst at least the following: manual entrance, thrown from a bin lifted by the waste collection vehicle, thrown from a bin lifted manually or dumped from a container of a sorting terminal.

5. The waste management apparatus as claimed in any of claims 1 to 4, wherein the at least one memory and at least one processor are further configured to determine, from the acquired images, a stream of waste associated with the new objects, amongst at least two streams of waste corresponding to at least two types of waste collection tours run in parallel by the waste collection vehicle.

6. The waste management apparatus as claimed in any of claims 1 to 5, wherein the at least one memory and at least one processor are further configured to determine if the waste collection vehicle is in motion and disregard new objects identified from images acquired while the waste collection vehicle is in motion.

7. The waste management apparatus as claimed in any of claims 1 to 6, wherein the object classification relates to sorting rules so that a type of waste collection tour can be determined from a class of objects, and the at least one memory and at least one processor are further configured to determine an actual type of the given waste collection tour from a distribution or a weighted distribution of the classes of at least a certain number of the new objects that entered the waste collection vehicle during the given waste collection tour.

8. The waste management apparatus as claimed in claim 7, wherein the at least one memory and at least one processor are further configured to:
- map the class of the new objects that entered the waste collection vehicle during the given waste collection tour with an expected type of waste collection tour based on the sorting rules,
- calculate a rate of waste contamination for a given location of the waste collection vehicle during the given waste collection tour, as a function or a weighted function of the number of new objects identified at said given location in each class mapped with an expected type of waste collection tour other than the actual type of the given waste collection tour,
- provide the rate of waste contamination.

9. The waste collection vehicle comprising a waste management apparatus as claimed in any of claims 1 to 8.

10. A computer implemented method for managing waste for use by a waste management apparatus of a waste collection vehicle, the method comprising at least:
- acquiring images of waste entering the waste collection vehicle,
- processing at least part of the acquired images through a machine learning module to detect one or more objects, and for each object detected in a given image, provide at least a class in a classification of objects, and a position in the given image,
- determine, amongst the detected objects, new objects entering the waste collection vehicle, by comparing each object detected in the given image with a history of objects detected in a plurality of previous images, based on a function of a plurality of distances comprising at least a distance between the class and a distance between the position of the objects being compared.

11. The computer implemented method of claim 10, further comprising providing by the learning module a probability distribution of the classes for each object detected in the given image, and the plurality of distances further comprises a distance between the probability distribution of the classes of the objects being compared.

12. The computer implemented method of any of claims 10 or 11, wherein the position of the object in a given image is defined by a bounding box around the object, the bounding box having a width, a height, and an area, said plurality of distances further comprises at least one of a distance between a ratio of the width and the height of the bounding boxes around the objects being compared, and a distance between the area of the bounding boxes around the objects being compared.

13. The method of any of claims 10 to 12 wherein the object classification relates to sorting rules so that a type of waste collection tour can be determined from a class of objects, the method comprising at least determining an actual type of the given waste collection tour from a distribution or a weighted distribution of the classes of at least a certain number of the new objects that entered the waste collection vehicle during the given waste collection tour.

14. The method of claim 13, further comprising:
- mapping the class of the new objects that entered the waste collection vehicle during the given waste collection tour with an expected type of waste collection tour based on the sorting rules,
- calculating a rate of waste contamination for a given location of the waste collection vehicle during the given waste collection tour, as a function or a weighted function of the number of new objects identified at said given location in each class mapped with an expected type of waste collection tour other than the actual type of the given waste collection tour,
- providing the rate of waste contamination.

15. A computer program product comprising instructions which when executed by an apparatus cause the apparatus to perform at least the steps of a method as claimed in any of claims 11 to 14.
